# EUROPEAN PATENT SPECIFICATION

(11) **EP 2 872 451 B1**
(45) Date of publication and mention of the grant of the patent: **27.04.2016**
(21) Application number: 13739253.6
(22) Date of filing: 10.07.2013
(51) Int. Cl.: C01G 53/00

(54) **DOPED NICKELATE COMPOUNDS**
DOTIERTE NICKELATVERBINDUNGEN
COMPOSÉS NICKELATE DOPÉS

(30) Priority: 10.07.2012 GB 201212261
(43) Date of publication of application: 20.05.2015
(73) Proprietor: FARADION Limited, Sheffield S1 4DP (GB)
(72) Inventor: BARKER, Jeremy, Chipping Norton Oxfordshire OX7 6EH (GB); HEAP, Richard, Oxford Oxfordshire OX2 9PT (GB)
(74) Representative: Bingham, Ian Mark
(86) International application number: PCT/GB2013/051822
(87) International publication number: WO 2014/009723

(56) References cited:
- EP-A1- 2 416 411
- US-A1- 2002 142 225
- US-A1- 2005 008 563
- US-A1- 2005 130 042
- US-A1- 2009 290 287
- US-A1- 2012 028 128
- US-A1- 2012 070 743

## Description

### FIELD OF THE INVENTION

The present invention relates to novel doped nickelate compounds, their method of preparation, to novel electrodes which utilise an active material that comprises said doped nickelate compounds, and to the use of these electrodes, for example in an energy storage device.

### BACKGROUND OF THE INVENTION

Lithium-ion battery technology has enjoyed a lot of attention in recent years and provides the preferred portable battery for most electronic devices in use today. Such batteries are "secondary" or rechargeable which means that they are capable of undergoing multiple charge/discharge cycles. Typically, lithium-ion batteries are prepared using one or more lithium electrochemical cells containing electrochemically active materials. Such cells comprise an anode (negative electrode), a cathode (positive electrode) and an electrolyte material. When a lithium-ion battery is charging, Li⁺ ions de-intercalate from the cathode and insert into the anode. Meanwhile charge balancing electrons pass from the cathode through the external circuit containing the charger and into the anode of the battery. During discharge the same process occurs but in the opposite direction.

Various electrochemically active materials have been suggested for use as the cathode materials, for example LiCoO₂, LiMn₂O₄ and LiNiO₂, see US 5,135,732 and US 4,246,253. However these materials exhibit problems, for example cycle fading (depletion in charge capacity over repeated charge/discharge cycles), which make them commercially unattractive. Attempts to address cycle fading have led to lithium metal phosphate and lithium metal fluorophosphates becoming favourable materials. Such materials were first reported in US 6,203,946, US 6,387,568, and by Goodenough et al. in "Phospho-olivines as Positive-Electrode Materials for Rechargeable Lithium Batteries", Journal of Electrochemical Society, (1997) No. 144, pp1188-1194. Many workers have tried to provide economical and reproducible synthesis methods for phosphate-containing materials, especially for high performance (optimised) phosphate-containing materials, and review of the prior art methods which describe the preparation of one particular lithium metal phosphate, namely, lithium iron phosphate (LiFePO₄), is given by X. Zhang et al in "Fabrication and Electrochemical Characteristics of LiFePO4 Powders for Lithium-lon Batteries", KONA Powder and Particle Journal No. 28 (2010) pp 50-73. As this review demonstrates, a lot of effort has been expended since lithium iron phosphate was first identified in 1997, to find the most expedient method for producing a LiFePO₄ material with the best all round performance.

EP2416411 discloses a positive electrode active material for a lithium ion battery that is Liₓ(Ni_{y}M_{1-y})O_{z}, in which M is one or more selected from the group consisting of Mn, Co, Mg, Al, Ti, Cr, Fe, Cu and Zr, x is within the range of 0.9-1.2, y is within the range of 0.3-0.95 and z is within the range of 1.8-2.4.

US2012/070743 discloses a positive active material with formula Liₓ(NiₚCo_{q}Mnᵣ) O_{y} (Formula 1), wherein in Formula 1, 0.95<=x<=1.05, 0<p<1, 0<q<1, 0<r<1, p +q+r=1 and 0<y<=2.025.

US2012/028128 discloses a cathode active material LiₐNi_{b}Co_{c}Mn_{d}MₑO_{f+[sigma];} examples 1-7 and examples 1-8 disclose lithium manganese nickelates. US2005/0130042 discloses LiNi_{1/3}Co_{1/3}Mn_{1/3}O₂ with oxidation states for the metal elements that differ from the present application.

US2009/290287 discloses the use of aqueous or non-aqueous electrolyte for a negative electrode.

US2002/142225 discloses a positive active material composition for a rechargeable lithium battery.

US2005/008563 disclose a composite oxide powder with composition LiₐNi_{b}Co_{c}Mn_{d}AlₑO₂ (wherein 0.05<=a<=1.20, 0.25<=b<=0.93, 0.05<=c<=0.35, 0.01<=d<=0.35, 0.01<=e<=0.15, 0.9<=b+c+d+e<=1.1).

Work is now being undertaken to find even more efficient electrochemically active materials, which have large charge capacity, are capable of good cycling performance, highly stable, and of low toxicity and high purity. Of course, to be commercially successful, the cathode materials must also be easily and affordably produced. This long list of requirements is difficult to fulfil but it is understood from the literature that the active materials which are most likely to succeed are those with small particle size and narrow size distribution, with an optimum degree of crystallinity, a high specific surface area, and with uniform morphology. The present Applicant has also now conducted work which demonstrates that electrochemical activity is further optimised when the active material includes metal constituents with certain defined oxidation states.

The present invention aims to provide novel compounds. Further the present invention aims to provide a cost effective electrode that contains an active material that is straightforward to manufacture and easy to handle and store. Another aim of the present invention is to provide an electrode that has a high initial specific discharge capacity and which is capable of being recharged multiple times without significant loss in charge capacity.

Therefore, the first aspect of the present invention provides compounds of the formula:

A_{1-δ} M¹_{V} M²_{W} M³_{X} M⁴_{Y} M⁵_{Z} O₂

wherein
A comprises one or more alkali metals selected from lithium or a mixture of two or more alkali metals in which lithium is the major constituent;
M¹ is nickel in oxidation state +2
M² comprises a metal in oxidation state +4 selected from one or more of manganese, titanium and zirconium;
M³ comprises a metal in oxidation state +2, selected from one or more of magnesium, calcium, copper, zinc and cobalt;
M⁴ comprises a metal in oxidation state +4, selected from one or more of titanium, manganese and zirconium;
M⁵ comprises a metal in oxidation state +3, selected from one or more of aluminium, iron, cobalt, molybdenum, chromium, vanadium, scandium and yttrium;
wherein
0 ≤ δ ≤ 0.1 ;
V is in the range 0 < V < 0.5;
W is in the range 0 < W ≤ 0.5;
X is in the range 0 ≤ X < 0.5;
Y is in the range 0 ≤ Y < 0.5;
Z is ≥ 0;
wherein when M⁵ = cobalt then X ≥ 0.1;
and further wherein V + W + X + Y + Z = 1.

The preferred alkali metal used in the compounds of present invention is lithium; this may either be used alone or as a mixture with sodium and/or potassium. In the case where the lithium is used with other alkali metals then preferably lithium is the major alkali metal constituent in the mixture.

Preferably the present invention provides a compound of the above formula wherein V is in the range 0.1 ≤ V ≤ 0.45; w is in the range 0 < W ≤ 0.5; x is in the range 0 ≤ X < 0.5; Y is in the range 0 ≤ Y < 0.5; Z is ≥ 0; and wherein V + W +X + Y + Z = 1.

Further preferably the present invention provides a compound of the above formula wherein V is in the range 0.3 ≤ V ≤ 0.45; W is in the range 0.1 ≤ W ≤ 0.5; X is in the range 0.05 ≤ X < 0.45; Y is in the range 0 ≤ Y ≤ 0.45; Z is ≥ 0; and wherein V + W + X + Y + Z = 1.

In particularly preferred compounds of the above formula, V is in the range 0.3 ≤ V < 0.45; W is in the range 0 < W ≤ 0.5; X is in the range 0 ≤ X ≤ 0.3; Y is in the range 0 ≤ Y ≤ 0.4; and Z is in the range 0 ≤ Z ≤ 0.5.

In another preferred group of active compounds of the above formula:
V is in the range 0 < V < 0.5;
W is in the range 0 < W ≤ 0.5;
X is in the range 0 ≤ X < 0.5;
Y is in the range 0 ≤ Y < 0.5;
Z is ≥ 0;
wherein when Z > 0 then X ≥ 0.1
and further wherein V + W + X + Y + Z = 1.

Compounds in which δ = 0.05 are especially preferred.

In additionally preferred compounds of the present invention M²# M⁴.

Especially preferred compounds of the present invention include:
LiNi_{0.5**-**x}Mn_{0.5-x}CuₓTiₓO₂;
LiNi_{0.5**-**x}Mn_{0.5-x}CaₓTiₓO₂;
LiNi_{0.5**-**x}Mn_{0.5-x}MgₓTiₓO₂;
LiNi_{0.**5**-x}Ti_{0.5-x}MgₓMnₓO₂; and
Li_{0.95}Ni_{0.3167}Ti_{0.3167}Mg_{0.1583}Mn_{0.2083}O₂

In a second aspect, the present invention provides an electrode comprising an active compound of the formula:

A_{1-δ}M¹_{V} M²_{W} M³_{X} M⁴_{Y} M⁵_{Z} O₂

wherein
A comprises one or more alkali metals selected from lithium or a mixed alkali metal in which lithium is the major constituent;
M¹ is nickel in oxidation state +2
M² comprises a metal in oxidation state +4 selected from one or more of manganese, titanium and zirconium;
M³ comprises a metal in oxidation state +2, selected from one or more of magnesium, calcium, copper, zinc and cobalt;
M⁴ comprises a metal in oxidation state +4, selected from one or more of titanium, manganese and zirconium;
M⁵ comprises a metal in oxidation state +3, selected from one or more of aluminium, iron, cobalt, molybdenum, chromium, vanadium, scandium and yttrium;
wherein
0 ≤ δ ≤ 0.1;
V is in the range 0 < V < 0.5;
W is in the range 0 < W ≤ 0.5;
X is in the range 0 ≤ X < 0.5;
Y is in the range 0 ≤ Y < 0.5;
Z is ≥ 0;
wherein when M⁵ = cobalt then X ≥ 0.1;
and further wherein V + W + X + Y + Z = 1.

Preferably the electrode of the present invention comprises an active compound of the above formula, wherein V is in the range 0.1 ≤ V ≤ 0.45; w is in the range 0 < W ≤ 0.5; x is in the range 0 ≤ X < 0.5; Y is in the range 0 ≤ Y < 0.5; Z is ≥ 0; and wherein V + W +X + Y + Z = 1.

Further preferably the electrode of the present invention comprises an active compound of the above formula, wherein V is in the range 0.3 ≤ V ≤ 0.45; W is in the range 0.1 ≤ W ≤ 0.5; X is in the range 0.05 ≤ X < 0.45; Y is in the range 0 ≤ Y ≤ 0.45; Z is ≥ 0; and wherein V + W + X + Y + Z = 1.

Particularly preferred electrodes of the present invention comprise an active compound of the above formula, wherein V is in the range 0.3 ≤ V < 0.45; W is in the range 0 < W ≤ 0.5; X is in the range 0 ≤ X ≤ 0.3; Y is in the range 0 ≤ Y ≤ 0.4; and Z is in the range 0 ≤ Z ≤ 0.5.

In another preferred embodiment of the present invention the electrode comprises a group of active compounds of the above formula:
V is in the range 0 < V < 0.5;
W is in the range 0 < W ≤ 0.5;
X is in the range 0 ≤ X < 0.5;
Y is in the range 0 ≤ Y < 0.5;
Z is ≥ 0;
wherein when Z > 0 then X ≥ 0.1
and further wherein V + W + X + Y + Z = 1.

The Applicant has observed that if NiO is present as an impurity phase in samples of the active compounds, then this has a detrimental effect on the electrochemical performance. NiO may be formed during the process of charging the electrode; at this time Ni2+ can be oxidized, using up energy that would normally be used to charge the active material. This is not only an irreversible reaction, but also has a detrimental effect on the cycling performance, resulting in a drop in capacity upon electrochemical cycling. The formation of NiO by this route is found to be minimised by reducing the amount of alkali metal in the active compound and is the purpose for compounds of the invention which have less than 1 unit of alkali metal.

Electrodes comprising active compounds of the above formula in which δ=0.05, are highly beneficial.

Additionally preferred electrodes of the present invention comprise an active compound as described above wherein M² # M⁴.

Especially preferred electrodes of the present invention comprise active compounds selected from one or more of:
LiNi_{0.5-x}Mn_{0.5-x}CuₓTiₓO₂ ;
LiNi_{0.45}Mn_{0.45}Cu_{0.05}Ti_{0.05}O₂,
LiNi_{0.4}Mn_{0.4}Cu_{0.1}Ti_{0.1}O₂;
LiNi_{0.33}Mn_{0.33}Cu_{0.167}Ti_{0.167}O₂;
LiNi_{0.5-x}Mn_{0.5-x}Caₓ₁TiₓO₂;
LiNi_{0.4}Mn_{0.4}Ca_{0.1}Ti_{0.1}O₂;
LiNi_{0.5-x}Mn_{0.5-x}MgₓTiₓO₂;
LiNi_{0.45}Mn_{0.45}Mg_{0.05}Ti_{0.05}O₂;
LiNi_{0.33}Mn₀.₃₃Mg_{0.167}Ti_{0.167}O₂;
LiNi_{0.5-x}Ti_{0.5-x}MgₓMnₓO₂; and
Li₀.₉₅Ni₀.₃₁₆₇Ti_{0.3167}Mg_{0.1583}Mn_{0.2083}O₂.

The electrodes according to the present invention are suitable for use in many different applications, for example energy storage devices, rechargeable batteries, electrochemical devices and electrochromic devices.

Advantageously, the electrodes according to the invention are used in conjunction with a counter electrode and one or more electrolyte materials. The electrolyte materials may be any conventional or known materials and may comprise either aqueous electrolyte(s) or non-aqueous electrolyte(s) or mixtures thereof.

In a third aspect, the present invention provides an energy storage device that utilises an electrode comprising the active materials described above, and particularly an energy storage device for use as one or more of the following: an alkali metal ion cell; an alkali metal-metal cell; a non-aqueous electrolyte alkali metal ion cell; or an aqueous electrolyte alkali metal ion cell, wherein the alkali metal comprises lithium alone or a mixture of lithium and one or more other alkali metals wherein lithium is the major alkali metal constituent in the mixture.

The novel compounds of the present invention may be prepared using any known and/or convenient method. For example, the precursor materials may be heated in a furnace so as to facilitate a solid state reaction process.

A fourth aspect of the present invention provides a particularly advantageous method for the preparation of the compounds described above comprising the steps of:
a) mixing the starting materials together, preferably intimately mixing the starting materials together and further preferably pressing the mixed starting materials into a pellet;
b) heating the mixed starting materials in a furnace at a temperature of between 400°C and 1500°C, preferably a temperature of between 500°C and 1200°C, for between 2 and 20 hours; and
c) allowing the reaction product to cool.

Preferably the reaction is conducted under an atmosphere of ambient air, and alternatively under an inert gas.

It is also possible to prepare lithium-ion materials from the sodium-ion derivatives by converting the sodium-ion materials into lithium-ion materials using an ion exchange process.

Typical ways to achieve Na to Li ion exchange include:
1. Mixing the sodium-ion rich material with an excess of a lithium-ion material e.g. LiNO₃, heating to above the melting point of LiNO₃ (264°C), cooling and then washing to remove the excess LiNO₃ and side-reaction products.
2. Treating the Na-ion rich material with an aqueous solution of lithium salts, for example 1 M LiCl in water; and
3. Treating the Na-ion rich material with a non-aqueous solution of lithium salts, for example LiBr in one or more aliphatic alcohols such as hexanol, propanol etc.

### BRIEF DESCRIPTION OF THE DRAWINGS

The present invention will now be described with reference to the following figures in which:
FIGURE 1A is an XRD of NaNi_{0.45}Mn_{0.45}Cu_{0.05}Ti_{0.05}O₂ (lower profile) and LiNi_{0.45}Mn_{0.45}Cu_{0.05}Ti_{0.05}O₂ (upper profile) prepared according to Example 1;
FIGURE 1B shows the Electrode Voltage (V vs Li) versus Cumulative Cathode Specific Capacity (mAh/g) for LiNi_{0.45}Mn_{0.45}Cu_{0.05}Ti_{0.05}O₂ prepared according to Example 1;
FIGURE 1C shows the first cycle Differential Capacity (mAh/g/V) versus Electrode Voltage (v vs Li) for LiNi_{0.45}Mn_{0.45}Cu_{0.05}Ti_{0.05}O₂ prepared according to Example 1;
FIGURE 2A is an XRD of NaNi_{0.4}Mn_{0.4}Ca_{0.1}Ti_{0.1}O₂ (lower profile) and LiNi_{0.4}Mn_{0.4}Ca_{0.1}Ti_{0.1}O₂ (upper profile) prepared according to Example 2;
FIGURE 2B shows the Electrode Voltage (V vs Li) versus Cumulative Cathode Specific Capacity (mAh/g) for LiNi_{0.40}Mn_{0.40}Ca_{0.1}Ti_{0.1}O₂ prepared according to Example 2;
FIGURE 2C shows the first cycle Differential Capacity (mAh/g/V) versus Electrode Voltage (v vs Li) for LiNi_{0.40}Mn_{0.40}Ca_{0.1}Ti_{0.1}O₂ prepared according to Example 2;
FIGURE 3A is an XRD of NaNi_{0.4}Mn_{0.4}Cu_{0.1}Ti_{0.1}O₂ (lower profile) and LiNi_{0.4}Mn_{0.4}Cu_{0.1}Ti_{0.1}O₂ (upper profile) prepared according to Example 3;
FIGURE 3B shows the Electrode Voltage (V vs Li) versus Cumulative Cathode Specific Capacity (mAh/g) for LiNi_{0.40}Mn_{0.40}Cu_{0.1}Ti_{0.1}O₂ prepared according to Example 3;
FIGURE 3C shows the first cycle Differential Capacity (mAh/g/V) versus Electrode Voltage (v vs Li) for LiNi_{0.40}Mn_{0.40}Cu_{0.1}Ti_{0.1}O₂ prepared according to Example 3;
FIGURE 4A is an XRD of NaNi_{0.45}Mn_{0.45}Mg_{0.05}Ti_{0.05}O₂ (lower profile) and LiNi_{0.45}Mn_{0.45}Mg_{0.05}Ti_{0.05}O₂ (upper profile) prepared according to Example 4;
FIGURE 4B shows the Electrode Voltage (V vs Li) versus Cumulative Cathode Specific Capacity (mAh/g) for LiNi_{0.45}Mn_{0.45}Mg_{0.05}Ti_{0.05}O₂ prepared according to Example 4;
FIGURE 4C shows the first cycle Differential Capacity (mAh/g/V) versus Electrode Voltage (v vs Li) for LiNi_{0.45}Mn_{0.45}Mg_{0.05}Ti_{0.05}O₂ prepared according to Example 4;
FIGURE 5A is an XRD of NaNi_{0.33}Mn_{0.33}Mg_{0.167}Ti_{0.167}O₂ (lower profile) and LiNi_{0.33}Mn_{0.33}Mg_{0.167}Ti_{0.167}O₂ (upper profile) prepared according to Example 5
FIGURE 5B shows the Electrode Voltage (V vs Li) versus Cumulative Cathode Specific Capacity (mAh/g) for LiNi_{0.33}Mn_{0.33}Mg_{0.167}Ti_{0.167}O₂ prepared according to Example 5;
FIGURE 5C shows the first cycle Differential Capacity (mAh/g/V) versus Electrode Voltage (v vs Li) for LiNi_{0.33}Mn_{0.33}Mg_{0.167}Ti_{0.167}O₂ prepared according to Example 5; and
FIGURE 6A is an XRD of Li_{0.95}Ni_{0.3167}Ti_{0.3167}Mg_{0.1583}Mn_{0.2083}O₂ prepared according to Example 6.

### DETAILED DESCRIPTION

The materials according to the present invention are prepared using the following generic method:

### Generic Synthesis Method:

Stoichiometric amounts of the precursor materials are intimately mixed together and pressed into a pellet. The resulting mixture is then heated in a tube furnace or a chamber furnace using either an ambient air atmosphere, or a flowing inert atmosphere (e.g. argon or
nitrogen), at a furnace temperature of between 400°C and 1500°C until reaction product forms; for some materials a single heating step is used and for others more than one heating step is used. When cool, the reaction product is removed from the furnace and ground into a powder.

### Product Analysis using XRD

All of the product materials were analysed by X-ray diffraction techniques using a Siemens D5000 powder diffractometer to confirm that the desired target materials had been prepared, to establish the phase purity of the product material and to determine the types of impurities present. From this information it is possible to determine the unit cell lattice parameters.

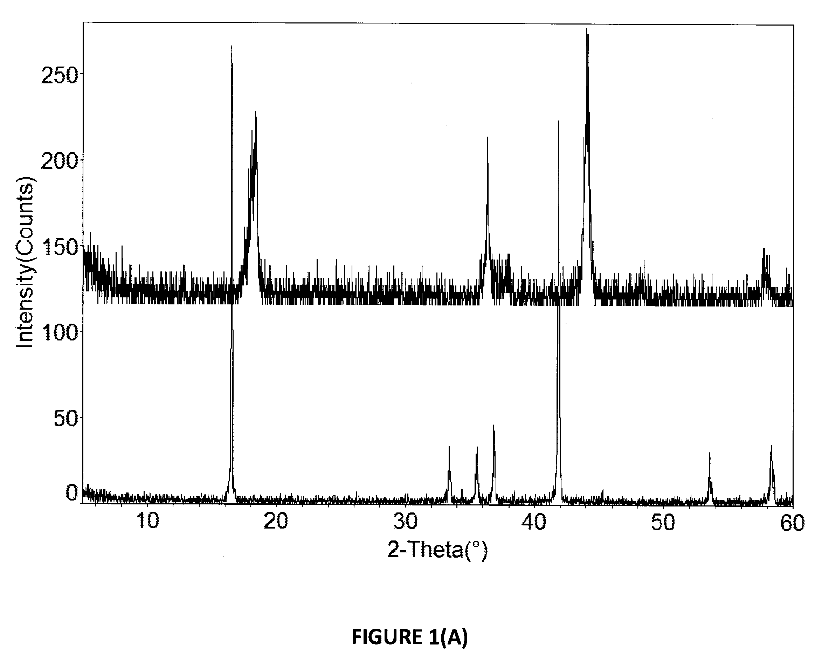

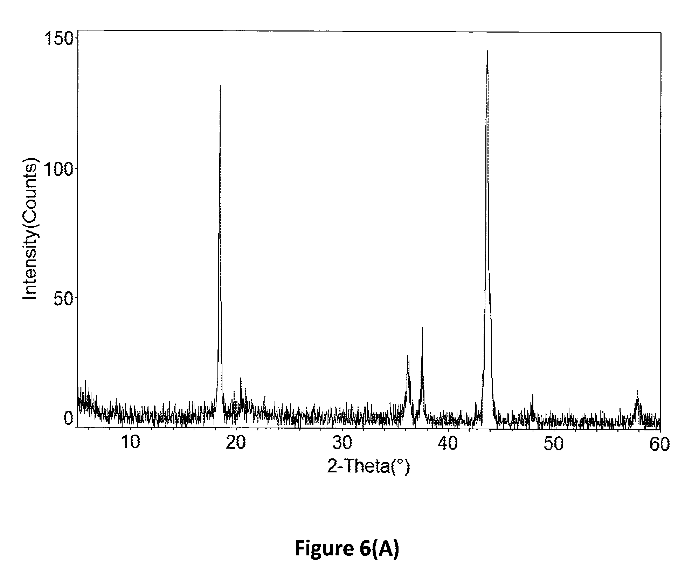

The operating conditions used to obtain the XRD spectra illustrated herein, are as follows: Slits sizes: 1 mm, 1 mm, 0.1 mm
Range: 2θ = 5 ° - 60 °
   X-ray Wavelength = 1.5418 A (Angstoms) (Cu Kα)
Speed: 0.5 seconds/step
   Increment: 0.015 ° for Figures 1A, 2A, 3A, 4A and 5A and 0.025° for Figure 6A

### Electrochemical Results

The target materials were tested using a lithium metal anode test cell. It is also possible to test using a Li-ion cell with a graphite anode. Cells may be made using the following procedures:

### Generic Procedure to Make a Lithium Metal Electrochemical Test Cell

The positive electrode is prepared by solvent-casting a slurry of the active material, conductive carbon, binder and solvent. The conductive carbon used is Super P (Timcal). PVdF co-polymer (e.g. Kynar Flex 2801, Elf Atochem Inc.) is used as the binder, and acetone is employed as the solvent. The slurry is then cast onto glass and a free-standing electrode film is formed as the solvent evaporates. The electrode is then dried further at about 80°C. The electrode film contains the following components, expressed in percent by weight: 80% active material, 8% Super P carbon, and 12% Kynar 2801 binder. Optionally, an aluminium current collector may be used to contact the positive electrode. Metallic lithium on a copper current collector may be employed as the negative electrode. The electrolyte comprises one of the following: (i) a 1 M solution of LiPF₆ in ethylene carbonate (EC) and dimethyl carbonate (DMC) in a weight ratio of 1:1; (ii) a 1 M solution of LiPF₆ in ethylene carbonate (EC) and diethyl carbonate (DEC) in a weight ratio of 1:1; or (iii) a 1 M solution of LiPF₆ in propylene carbonate (PC) A glass fibre separator (Whatman, GF/A) or a porous polypropylene separator (e.g. Celgard 2400) wetted by the electrolyte is interposed between the positive and negative electrodes.

### Generic Procedure to Make a Graphite Li-ion Cell

The positive electrode is prepared by solvent-casting a slurry of the active material, conductive carbon, binder and solvent. The conductive carbon used is Super P (Timcal). PVdF co-polymer (e.g. Kynar Flex 2801, Elf Atochem Inc.) is used as the binder, and acetone is employed as the solvent. The slurry is then cast onto glass and a free-standing electrode film is formed as the solvent evaporates. The electrode is then dried further at about 80°C. The electrode film contains the following components, expressed in percent by weight: 80% active material, 8% Super P carbon, and 12% Kynar 2801 binder. Optionally, an aluminium current collector may be used to contact the positive electrode.

The negative electrode is prepared by solvent-casting a slurry of the graphite active material (Crystalline Graphite, supplied by Conoco Inc.), conductive carbon, binder and solvent. The conductive carbon used is Super P (Timcal). PVdF co-polymer (e.g. Kynar Flex 2801, Elf Atochem Inc.) is used as the binder, and acetone is employed as the solvent. The slurry is then cast onto glass and a free-standing electrode film is formed as the solvent evaporates. The electrode is then dried further at about 80°C. The electrode film contains the following components, expressed in percent by weight: 92% active material, 2% Super P carbon, and 6% Kynar 2801 binder. Optionally, a copper current collector may be used to contact the negative electrode.

### Cell Testing

The cells are tested as follows, using Constant Current Cycling techniques.

The cell is cycled at a given current density between pre-set voltage limits. A commercial battery cycler from Maccor Inc. (Tulsa, OK, USA) is used. On charge, lithium ions are extracted from the cathode active material. During discharge, lithium ions are re-inserted into the cathode active material.

The above methods were used in the following Examples 1 to 6 to prepare active materials according to the present invention.

### EXAMPLE 1

### Target Phase: LiNi_{0.45}Mn_{0.45}Cu_{0.05}Ti_{0.05}O₂ (X0453)

### STEP 1: The preparation of NaNi_{0.45}Mn_{0.45}Cu_{0.05}Ti_{0.05}O₂ (X0421a)

### Precursor Mix:

Na₂CO₃,
NiCO₃,
MnO₂
CuO
TiO₂

### Furnace Conditions:

1)Air/900°C, dwell time of 8 hours
2) Air/900°C, dwell time of 8 hours.

### STEP 2: Ion exchange reaction to produce LiNi_{0.45}Mn_{0.45}Cu_{0.05}Ti_{0.05}O₂ (X0453)

### Precursor Mix:

NaNi_{0.45}Mn_{0.45}Cu_{0.05}Ti_{0.05}O₂ (X0421a), LiNO₃ (15 x molar excess)

### Furnace Conditions:

300 °C, air, dwell time of 2 hours
Washed in deionised water, to remove LiNO₃ and NaNO₃ (formed during ion exchange process) and dried under vacuum

### Analysis of product

Figure 1 (A) shows the XRD obtained for the target material LiNi_{0.45}Mn_{0.45}Cu_{0.05}Ti_{0.05}O₂, (upper profile) and the precursor material NaNi_{0.45}Mn_{0.45}Cu_{0.05}Ti_{0.05}O₂ (lower profile). The presence and high purity of the lithium-containing target material is confirmed by the absence of any Na-containing phase being seen in the upper profile, and by the fact that the lithium-containing target material phase exhibits a substantial increase in peak angles. This suggests a smaller unit cell than for the precursor material and is consistent with the replacement of Na with Li.

### Electrochemical Results:

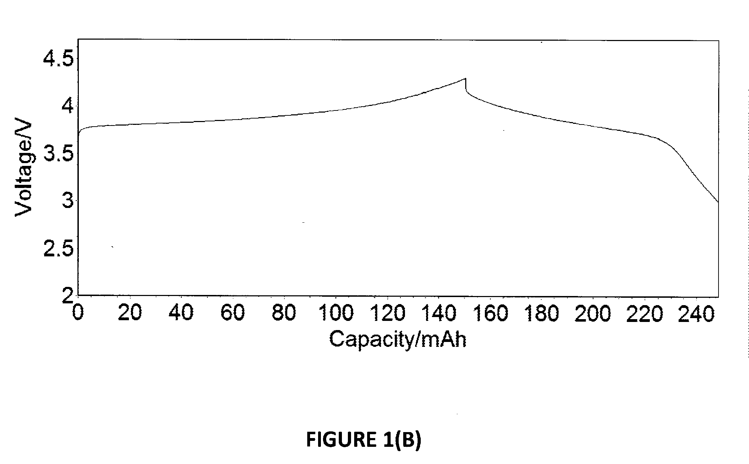

The data shown in Fig. 1 (B) (Electrode Voltage (V vs. Li) versus Cumulative Cathode Specific Capacity (mAh/g)) are derived from the constant current cycling data for the LiNi_{0.45}Mn_{0.45}Cu_{0.05}Ti_{0.05}O₂ (Sample X0453) active material in a metallic lithium half-cell. The electrolyte used was a 1.0 M solution of LiPF₆ in ethylene carbonate/diethyl carbonate. The constant current data were collected at an approximate current density of 0.20 mA/cm² between voltage limits of 3.00 and 4.30 V vs. Li. The testing was carried out at 25°C.
During the cell charging process, lithium ions are extracted from the cathode active material. During the subsequent discharge process, lithium ions are re-inserted into the cathode active material. The first charge process corresponds to a cathode specific capacity of 151 mAh/g. The first discharge process corresponds to a cathode specific capacity of 97 mAh/g. These data demonstrate the reversibility of the lithium ion insertion reactions in the LiNi_{0.45}Mn_{0.45}Cu_{0.05}Ti_{0.05}O₂ active material.

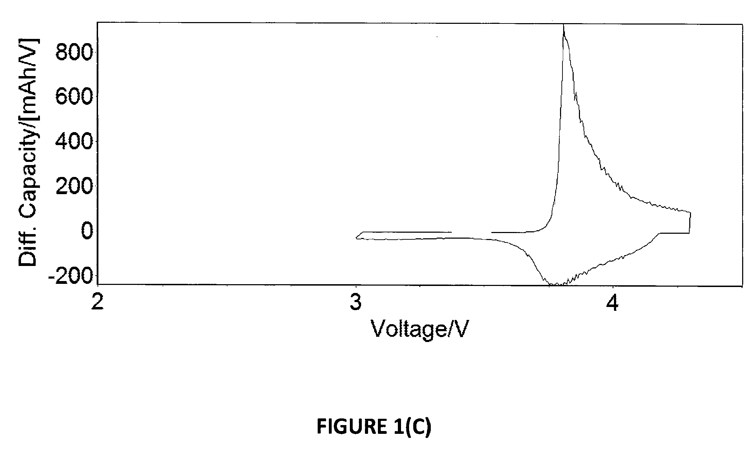

Figure 1 (C) shows the first cycle differential capacity profile (Differential Capacity (mAh/g/V) versus Electrode Voltage (V vs. Li)] for the LiNi_{0.45}Mn_{0.45}Cu_{0.05}Ti_{0.05}O₂ (Sample X0453) derived from the constant current cycling data shown in Figure 1 (B). Differential capacity data have been shown to allow characterization of the reaction reversibility, order-disorder phenomenon and structural phase changes within the ion insertion system.

The data presented in Figure 1(C) for the LiNi_{0.45}Mn_{0.45}Cu_{0.05}Ti_{0.05}O₂ cathode confirm the reversible lithium-ion insertion behaviour as characterized by the generally symmetrical nature of the differential capacity peaks during cell charge and discharge.

### EXAMPLE 2

### Target Phase: LiNi_{0.04}Mn_{0.4}Ca_{0.1}Ti_{0.1}O₂ (X0454)

### STEP 1: The Preparation of NaNi_{0.}₄Mn_{0.}₄Ca_{0.}₁Ti_{0.}₁O₂ (X0423b)

### Precursor Mix:

TiO₂
Na₂CO₃,
NiCO₃,
MnO₂
CaCO₃

### Furnace Conditions:

1)Air/900°C, dwell time of 8 hours
2) Air/900°C, dwell time of 8 hours.
3) Air/950°C, dwell time of 8 hours

### STEP 2: Ion Exchange reaction to produce LiNi_{0.4}Mn_{0.4}Ca_{0.4}Ti_{0.1}O₂ (X0454)

### Precursor Mix: -

NaNi_{0.4}Mn_{0.4}Ca_{0.1}Ti_{0.1}O₂ (X0423b), LiNO₃ (15 x molar excess)

### Furnace Conditions:

300 °C, air, dwell time of 2 hours
Washed in deionised water, to remove LiNO₃ and NaNO₃ (formed during ion exchange process) and dried under vacuum

### Analysis of product

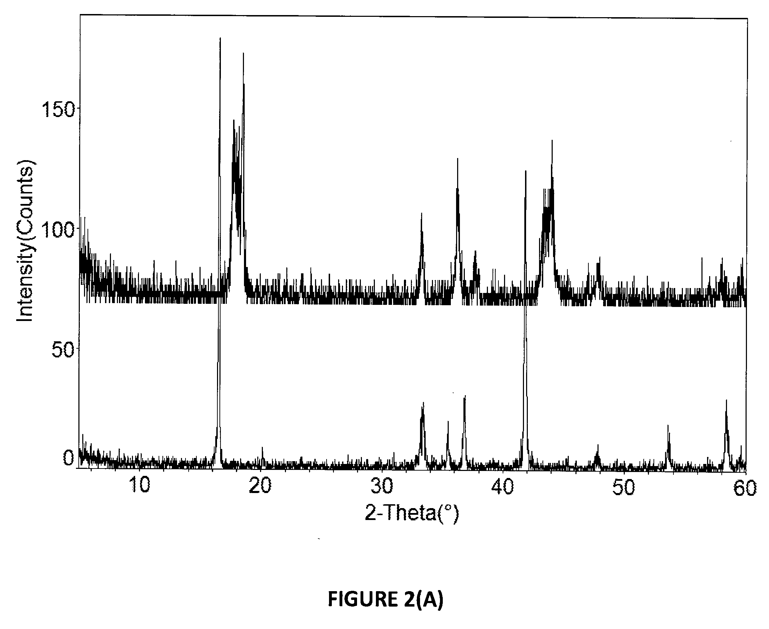

Figure 2(A) shows the XRD obtained for the target material LiNi_{0.4}Mn_{0.4}Ca_{0.1} Ti_{0.1}O₂, (upper profile) and the precursor material NaNi_{0.40}Mn_{0.40}Ca_{0.1}Ti_{0.1}O₂ (lower profile). The presence and high purity of the lithium-containing target material is confirmed by the absence of any Na-containing phase being seen in the upper profile, and by the fact that the lithium-containing target material phase exhibits a substantial increase in peak angles. This suggests a smaller unit cell than for the precursor material and is consistent with the replacement of Na with Li.

### Electrochemical Results:

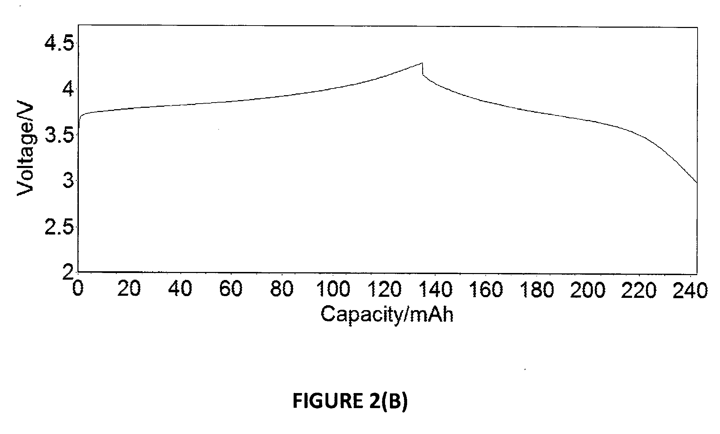

The data shown in Fig. 2(B) (Electrode Voltage (V vs. Li) versus Cumulative Cathode Specific Capacity (mAh/g)) are derived from the constant current cycling data for the LiNi_{0.40}Mn_{0.40}Ca_{0.10}Ti_{0.10}O₂ (Sample X0454) active material in a metallic lithium half-cell. The electrolyte used was a 1.0 M solution of LiPF₆ in ethylene carbonate/diethyl carbonate. The constant current data were collected at an approximate current density of 0.20 mA/cm² between voltage limits of 3.00 and 4.30 V vs. Li. The testing was carried out at 25°C. During the cell charging process, lithium ions are extracted from the cathode active material. During the subsequent discharge process, lithium ions are re-inserted into the cathode active material. The first charge process corresponds to a cathode specific capacity of 135 mAh/g. The first discharge process corresponds to a cathode specific capacity of 108 mAh/g. These data demonstrate the reversibility of the lithium ion insertion reactions in the LiNi_{0.40}Mn_{0.40}Ca_{0.10}Ti_{0.10}O₂ active material.

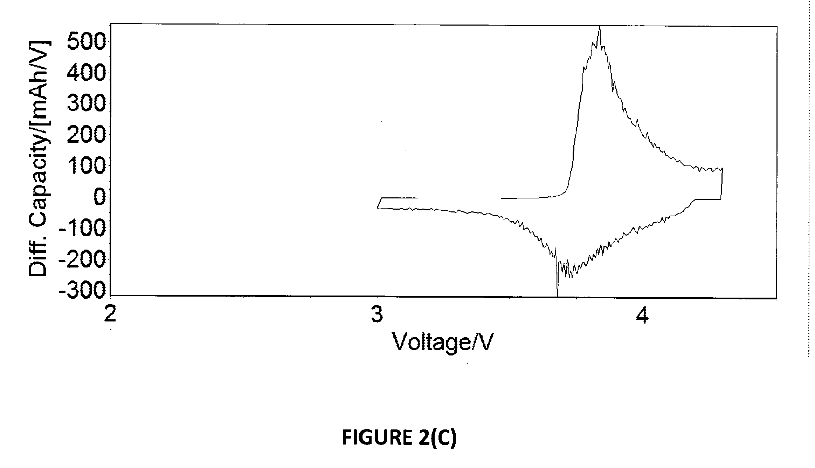

Figure 2(C) shows the first cycle differential capacity profile (Differential Capacity [mAh/g/V versus Electrode Voltage (V vs. Li)] for the LiNi_{0.40}Mn_{0.40}Ca_{0.10}Ti_{0.10}O₂ (Sample X0454) derived from the constant current cycling data shown in Figure 2(B). Differential capacity data have been shown to allow characterization of the reaction reversibility, order-disorder phenomenon and structural phase changes within the ion insertion system.

The data presented in Figure 2(C) for the LiNi_{0.40}Mn_{0.40}Ca_{0.10}Ti_{0.10}O₂ cathode confirm the reversible lithium-ion insertion behaviour as characterized by the generally symmetrical nature of the differential capacity peaks during cell charge and discharge.

### EXAMPLE 3

### Target Phase: LiNi_{0.4}Mn_{0.4}Cu_{0.1}Ti_{0.1}O₂ (X0455)

### STEP 1: The preparation of NaNi_{0.4}Mn_{0.4}Cu_{0.1}Ti_{0.1}O₂ (X0425)

### Precursor Mix:

Na₂CO₃,
NiCO₃,
MnO₂
CuO
TiO₂

### Furnace Conditions:

1)Air/900°C, dwell time of 8 hours
2) Air/900°C, dwell time of 8 hours

### STEP 2: Ion Exchange Reaction to prepare LiNi_{0.4}Mn_{0.4}Cu_{0.1}Ti_{0.1}O₂ (X0455)

### Precursor Mix:

*NaNi_{0.4}Mn_{0.4}Cu_{0.1}Ti_{0.1}O₂ (X0425), LiNO₃ (15 x molar excess)*

### Furnace Conditions:

300 °C, air, dwell time of 2 hours
Washed in deionised water, to remove LiNO₃ and NaNO₃ (formed during ion exchange process) and dried under vacuum

### Analysis of product

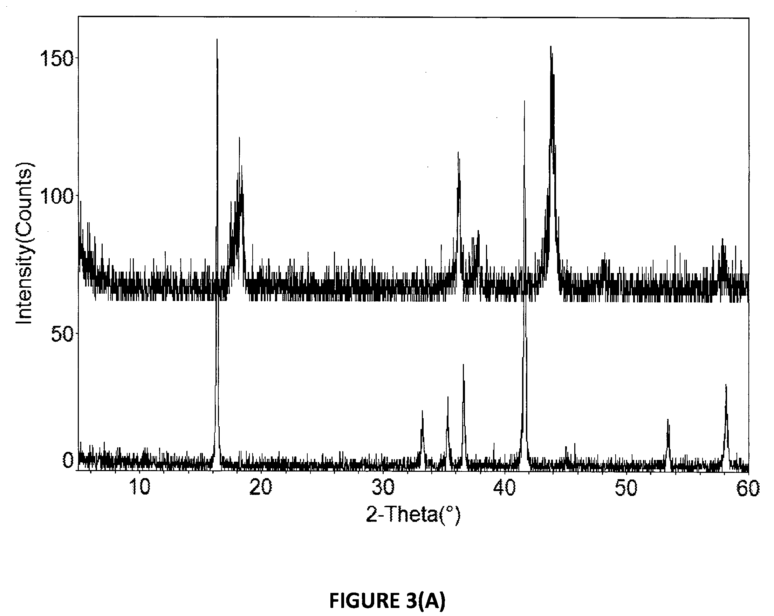

Figure 3(A) shows the XRD obtained for the target material LiNi_{0.4}Mn_{0.4}Cu_{0.1}Ti_{0.1}O₂ (upper profile) and the precursor material NaNi_{0.4}Mn_{0.4}Cu_{0.1}Ti_{0.1}O₂ (lower profile). The presence and high purity of the lithium-containing target material is confirmed by the absence of any Na-containing phase being seen in the upper profile, and by the fact that the lithium-containing target material phase exhibits a substantial increase in peak angles. This suggests a smaller unit cell than for the precursor material and is consistent with the replacement of Na with Li.

### Electrochemical Results:

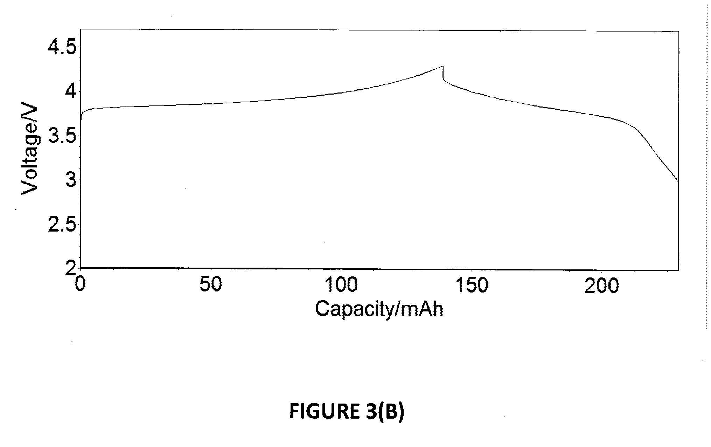

The data shown in Fig. 3(B) (Electrode Voltage (V vs. L i) versus Cumulative Cathode Specific Capacity (mAh/g)) are derived from the constant current cycling data for the LiNi_{0.40}Mn_{0.40}Cu_{0.10}Ti_{0.10}O₂ (Sample X0455) active material in a metallic lithium half-cell. The electrolyte used was a 1.0 M solution of LiPF₆ in ethylene carbonate/diethyl carbonate. The constant current data were collected at an approximate current density of 0.20 mA/cm² between voltage limits of 3.00 and 4.30 V vs. Li. The testing was carried out at 25°C.
During the cell charging process, lithium ions are extracted from the cathode active material. During the subsequent discharge process, lithium ions are re-inserted into the cathode active material. The first charge process corresponds to a cathode specific capacity of 139 mAh/g. The first discharge process corresponds to a cathode specific capacity of 90 mAh/g. These data demonstrate the reversibility of the lithium ion insertion reactions in the LiNi_{0.40}Mn_{0.40}Cu_{0.10}Ti_{0.10}O₂ active material.

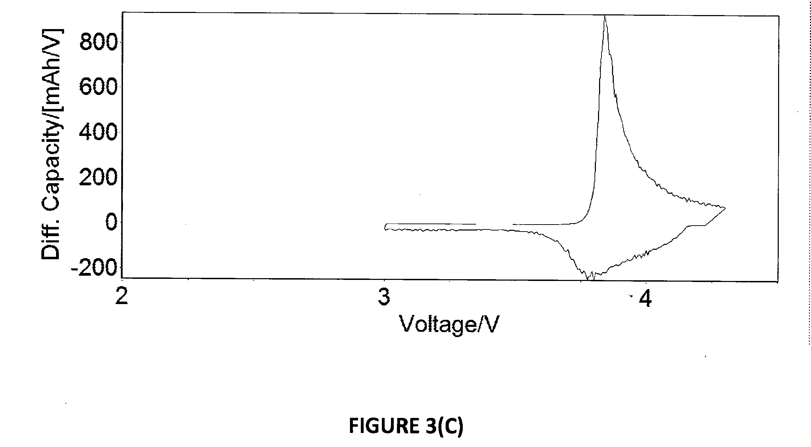

Figure 3(C) shows the first cycle differential capacity profile (Differential Capacity [mAh/g/V versus Electrode Voltage (V vs. Li)] for the LiNi_{0.40}Mn_{0.40}Cu_{0.10}Ti_{0.10}O₂ (Sample X0455) derived from the constant current cycling data shown in Figure 3(B). Differential capacity data have been shown to allow characterization of the reaction reversibility, order-disorder phenomenon and structural phase changes within the ion insertion system.

The data presented in Figure 3(C) for the LiNi_{0.40}Mn_{0.40}Cu_{0.10}Ti_{0.10}O₂ cathode confirm the reversible lithium-ion insertion behaviour as characterized by the generally symmetrical nature of the differential capacity peaks during cell charge and discharge.

### EXAMPLE 4

### Target Phase: LiNi_{0.45}Mn_{0.45}Mg_{0.05}Ti_{0.05}O₂ (X0654)

### STEP 1: Preparation of NaNi_{0.45}Mn_{0.45}Mg_{0.05}Ti_{0.05}O₂ (X0472a)

### Precursor Mix:

Al(OH)₃
Na₂CO₃
NiCO₃
Mg(OH)₂
MnO₂
TiO₂

### Furnace Conditions:

1) Air/800°C, dwell time of 8 hours
2) Air/900°C, dwell time of 8 hours.

### STEP 2: Ion Exchange reaction to produce LiNi_{0.45}Mn_{0.45}Mg_{0.05}Ti_{0.05}O₂ (X0654)

### Precursor Mix: -

NaNi_{0.45}Mn_{0.45}Mg_{0.05}Ti_{0.05}O₂ (X0472a), LiNO₃ (15 x molar excess)

### Furnace Conditions:

300 °C, air, dwell time of 2 hours
Washed in deionised water, to remove LiNO₃ and NaNO₃ (formed during ion exchange process) and dried under vacuum

### Analysis of product

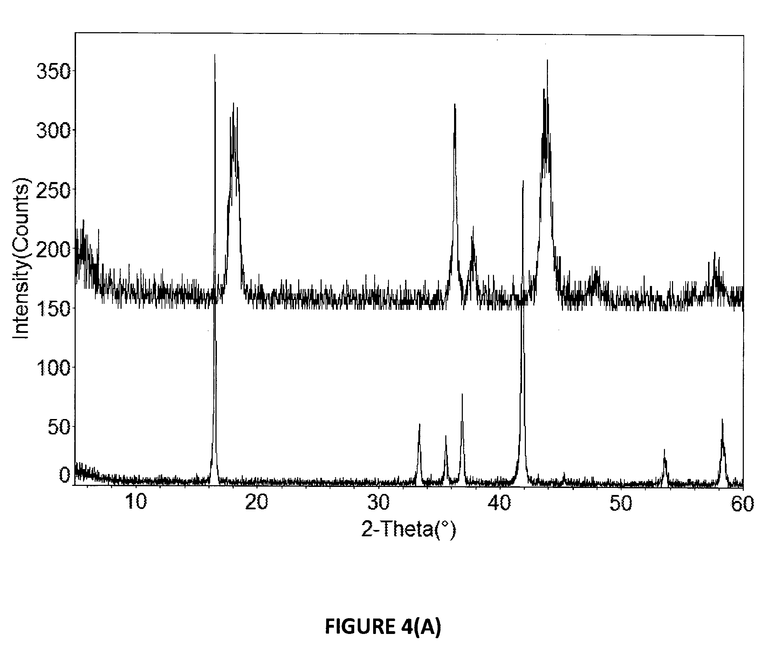

Figure 4(A) shows the XRD obtained for the target material LiNi_{0.45}Mn_{0.45}Mg_{0.05}Ti_{0.05}O₂, (upper profile) and the precursor material NaNi_{0.45}Mn_{0.45}Mg_{0.05}Ti_{0.05}O₂ (lower profile). The presence and high purity of the lithium-containing target material is confirmed by the absence of any Na-containing phase being seen in the upper profile, and by the fact that the lithium-containing target material phase exhibits a substantial increase in peak angles. This suggests a smaller unit cell than for the precursor material and is consistent with the replacement of Na with Li.

### Electrochemical Results:

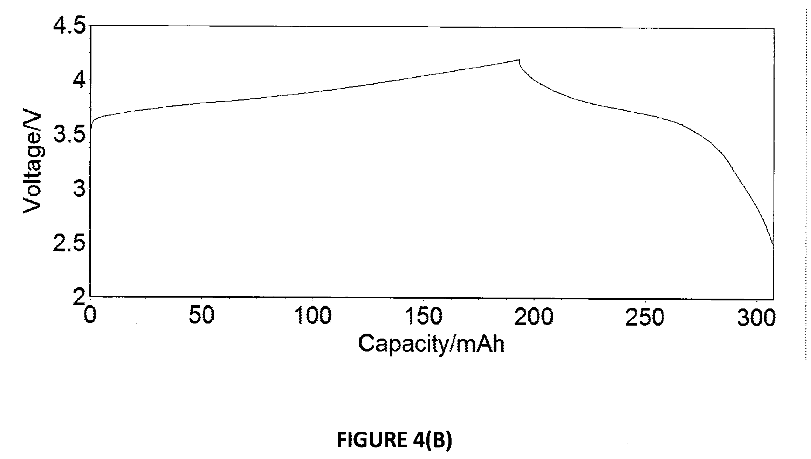

The data shown in Figure 4(B) (Electrode Voltage (V vs. Li) versus Cumulative Cathode Specific Capacity (mAh/g)) are derived from the constant current cycling data for the LiNi_{0.45}Mn_{0.45}Mg_{0.05}Ti_{0.10}O₂ (Sample X0654) active material in a metallic lithium half-cell. The electrolyte used was a 1.0 M solution of LiPF₆ in ethylene carbonate/diethyl carbonate. The constant current data were collected at an approximate current density of 0.20 mA/cm² between voltage limits of 3.00 and 4.20 V vs. Li. The testing was carried out at 25°C.
During the cell charging process, lithium ions are extracted from the cathode active material. During the subsequent discharge process, lithium ions are re-inserted into the cathode active material. The first charge process corresponds to a cathode specific capacity of 193 mAh/g. The first discharge process corresponds to a cathode specific capacity of 115 mAh/g. These data demonstrate the reversibility of the lithium ion insertion reactions in the LiNi_{0.45}Mn_{0.45}Mg_{0.05}Ti_{0.10}O₂ active material.

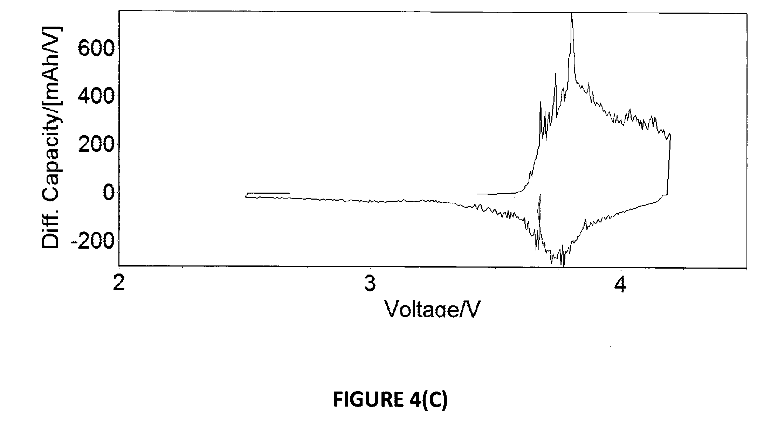

Figure 4(C) shows the first cycle differential capacity profile (Differential Capacity [mAh/g/V versus Electrode Voltage (V vs. Li)] for the LiNi_{0.45}Mn_{0.45}Mg_{0.05}Ti_{0.10}O₂ (Sample X0654) derived from the constant current cycling data shown in Figure 4(B). Differential capacity data have been shown to allow characterization of the reaction reversibility, order-disorder phenomenon and structural phase changes within the ion insertion system.

The data presented in Figure 4(C) for the LiNi_{0.45}Mn_{0.45}Mg_{0.05}Ti_{0.10}O₂ cathode confirm the reversible lithium-ion insertion behaviour as characterized by the generally symmetrical nature of the differential capacity peaks during cell charge and discharge.

### EXAMPLE 5

### Target Phase: LiNi_{0.333}Mn_{0.333}Mg_{0.167}Ti_{0.167}O₂ (X0655)

### STEP 1: Preparation of NaNi_{0.333}Mn_{0.333}Mg_{0.167}Ti_{0.167}O₂ (X0628)

### Precursor Mix:

TiO₂ Na₂CO₃
NiCO₃
MnO₂
Mg(OH)₂

### Furnace Conditions:

1) Air/900°C, dwell time of 8 hours
2) Air/900°C, dwell time of 8 hours.

### STEP 2: Ion Exchange reaction to produce LiNi_{0.333}Mn_{0.333}Mg_{0.167} Ti_{0.167}O₂ (X0655)

### Precursor Mix:

NaNi_{0.333}Mn_{0.333}Mg_{0.167}Ti_{0.167}O₂ (X0628), LiNO₃ (15 x molar excess)

### Furnace Conditions:

300 °C, air, dwell time of 2 hours
Washed in deionised water, to remove LiNO₃ and NaNO₃ (formed during ion exchange process) and dried under vacuum

### Analysis of Product

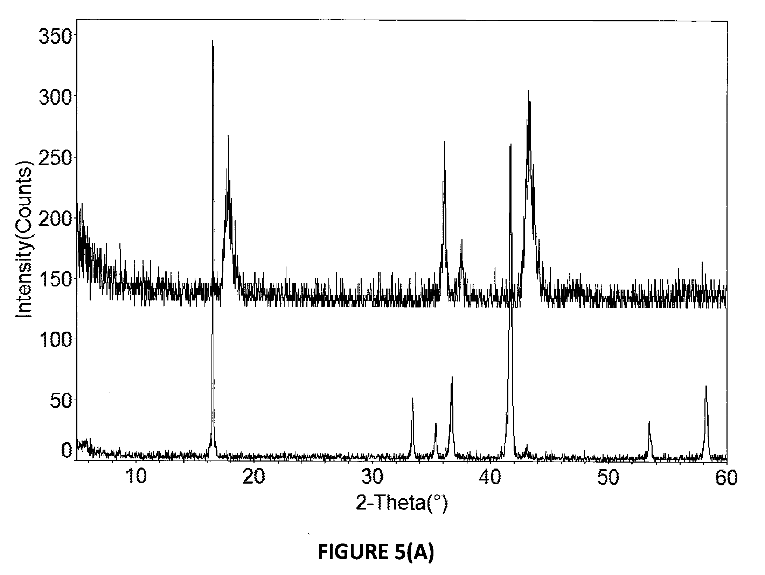

Figure 5(A) shows the XRD obtained for the target material LiNi_{0.333}Mn_{0.333}Mg_{0.167} Ti_{0.167}O₂ (X0655), (upper profile) and the precursor material NaNi_{0.333}Mn_{0.333}Mg_{0.167}Ti_{0.167}O₂ (lower profile). The presence and high purity of the lithium-containing target material is confirmed by the absence of any Na-containing phase being seen in the upper profile, and by the fact that the lithium-containing target material phase exhibits a substantial increase in peak angles. This suggests a smaller unit cell than for the precursor material and is consistent with the replacement of Na with Li.

### Electrochemical Results:

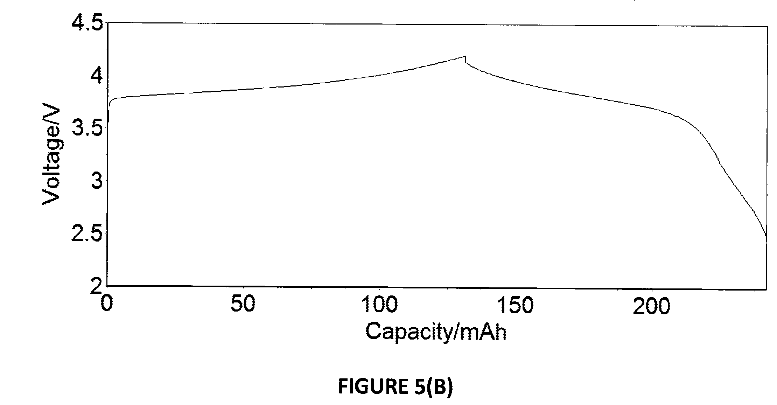

The data shown in Figure 5(B) (Electrode Voltage (V vs. Li) versus Cumulative Cathode Specific Capacity (mAh/g)) are derived from the constant current cycling data for the LiNi_{0.333}Mn_{0.333}Mg_{0.167}Ti_{0.167}O₂ (Sample X0655) active material in a metallic lithium half-cell. The electrolyte used was a 1.0 M solution of LiPF₆ in ethylene carbonate/diethyl carbonate. The constant current data were collected at an approximate current density of 0.20 mA/cm² between voltage limits of 3.00 and 4.20 V vs. Li. The testing was carried out at 25°C.
During the cell charging process, lithium ions are extracted from the cathode active material. During the subsequent discharge process, lithium ions are re-inserted into the cathode active material. The first charge process corresponds to a cathode specific capacity of 132 mAh/g. The first discharge process corresponds to a cathode specific capacity of 110 mAh/g. These data demonstrate the reversibility of the lithium ion insertion reactions in the LiNi_{0.333}Mn_{0.333}Mg_{0.167}Ti_{0.167}O₂ active material.

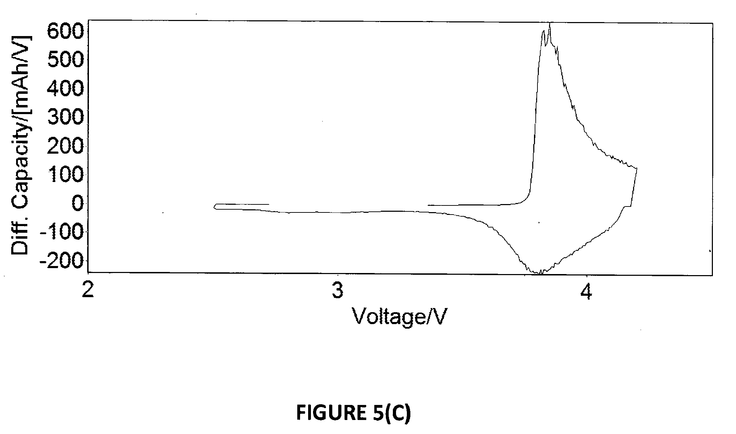

Figure 5(C) shows the first cycle differential capacity profile (Differential Capacity [mAh/g/V versus Electrode Voltage (V vs. Li)] for the LiNi_{0.333}Mn_{0.333}Mg_{0.167}Ti_{0.167}O₂ (Sample X0655) derived from the constant current cycling data shown in Figure 5(B). Differential capacity data have been shown to allow characterization of the reaction reversibility, order-disorder phenomenon and structural phase changes within the ion insertion system.

The data presented in Figure 5(C) for the LiNi_{0.333}Mn_{0.333}Mg_{0.167}Ti_{0.167}O₂ cathode confirm the reversible lithium-ion insertion behaviour as characterized by the generally symmetrical nature of the differential capacity peaks during cell charge and discharge.

### EXAMPLE 6

### Target Material: Li_{0.95}Ni_{0.3167}Ti_{0.3167}Mg_{0.1583}Mn_{0.2083}O₂ (X1388c)

### Precursor Mix:

0.475 Li₂CO₃
0.3167 NiCO₃
0.3167 TiO₂
0.2083 MnO₂
0.1583 Mg(OH)₂

### Mixing Solvent:

Acetone

### Furnace Conditions: -

700 °C in air, dwell time of 10 hours
800 °C in air, dwell time of 20 hours
900 °C in air, dwell time of 8 hours
1000 °C in air, dwell time of 8 hours
(sample reground and repelletised between each firing)

### Analysis of Product

Figure 6(A) shows the XRD for the target product Li_{0.95}Ni_{0.3167}Ti_{0.3167}Mg_{0.1583}Mn_{0.2083}O₂

## Claims

1. A compound of the formula:
A_{1-δ} M¹_{V} M²_{W} M³ _{X} M⁴_{Y} M⁵_{Z} O₂
wherein
A comprises either lithium or a mixed alkali metal in which lithium is the major constituent;
M¹ is nickel in oxidation state +2
M² comprises a metal in oxidation state +4 selected from one or more of manganese,
titanium and zirconium;
M³ comprises a metal in oxidation state +2, selected from one or more of magnesium, calcium, copper, zinc and cobalt;
M⁴ comprises a metal in oxidation state +4, selected from one or more of titanium,
manganese and zirconium;
M⁵ comprises a metal in oxidation state +3, selected from one or more of aluminium, iron, cobalt, molybdenum, chromium, vanadium, scandium and yttrium;
wherein
0 ≤ δ ≤ 0.1;
V is in the range 0 < V <0.5;
W is in the range 0 < W ≤ 0.5;
X is in the range 0 ≤ X < 0.5;
Y is in the range 0 ≤ Y < 0.5;
Z is ≥ 0;
wherein when M⁵ = cobalt then X ≥ 0.1;
and further wherein V + W + X + Y + Z = 1.

2. A compound according to claim 1 wherein V is in the range 0.1 ≤ V ≤ 0.45; W is in the range 0 < W ≤ 0.5; X is in the range 0 ≤ X < 0.5; Y is in the range 0 ≤ Y < 0.5; Z is ≥ 0; and wherein V + W + X + Y + Z = 1.

3. A compound according to claim 1 wherein V is in the range 0.3 ≤ V ≤ 0.45; W is in the range 0.1 ≤ W ≤ 0.5; X is in the range 0.05 ≤ X < 0.45; Y is in the range 0 ≤ Y ≤ 0.45; Z is ≥ 0; and wherein V + W + X + Y + Z = 1.

4. A compound according to claim 1 wherein M² ≠ M⁴.

5. A compound according to claim 1 of the formula: LiNi_{0.5-x}Mn_{0.5-x}CaₓTiₓO₂, LiNi_{0.5-x}Mn_{0.5-x}MgₓTiₓO₂ LiNi_{0.5-x}Ti_{0.5-x}MgₓMnₓO₂ and Li_{0.95}Ni_{0.3167}Ti_{0.3167}Mg_{0.1583}Mn_{0.2083}O₂.

6. An electrode comprising an active compound according to claim 1.

7. An electrode according to claim 6 used in conjunction with a counter electrode and one or more electrolyte materials.

8. An electrode according to claim 7 wherein the electrolyte material comprises an aqueous electrolyte material.

9. An electrode according to claim 7 wherein the electrolyte material comprises a non-aqueous electrolyte.

10. An energy storage device comprising an electrode according to claim 6.

11. An energy storage device according to claim 10 suitable for use as one or more of the following: alkali metal ion cell; an alkali metal metal cell; a non-aqueous electrolyte alkali metal ion cell; and an aqueous electrolyte alkali metal ion cell, wherein the alkali metal is lithium alone or a mixture of lithium and one or more other alkali metals in which lithium is the major alkali metal constituent in the mixture.

12. A rechargeable battery comprising an electrode according to claim 6.

13. An electrochemical device comprising an electrode according to claim 6.

14. An electrochromic device comprising an electrode according to claim 6.

15. A method of preparing the compounds according to claim 1 comprising the steps of:
a) mixing the starting materials together,
b) heating the mixed starting materials in a furnace at a temperature of between 400°C and 1500°C, for between 2 and 20 hours; and
c) allowing the reaction product to cool.

## Patentansprüche

1. Stoff der Formel:
A_{1-δ} M¹V M²_{W} M³_{X} M⁴_{Y} M⁵_{Z} O₂
worin
A entweder Lithium oder eine Alkalimetallmixtur mit Lithium als Hauptbestandteil umfasst;
M¹ Nickel in der Oxidationsstufe +2 ist;
M² umfasst ein Metall in der Oxidationsstufe +4, ausgewählt aus einem oder mehreren der Metalle Mangan, Titan und Zirconium;
M³ umfasst ein Metall in der Oxidationsstufe +2, ausgewählt aus einem oder mehreren der Metalle Magnesium, Calcium, Kupfer, Zink und Cobalt;
M⁴ umfasst ein Metall in der Oxidationsstufe +4, ausgewählt aus einem oder mehreren der Metalle Titan, Mangan und Zirconium;
M⁵ umfasst ein Metall in der Oxidationsstufe +3, ausgewählt aus einem oder mehreren der Metalle Aluminium, Eisen, Cobalt, Molybdän, Chrom, Vanadium, Scandium und Yttrium;
worin
0 ≤ δ ≤ 0.1
V im Bereich zwischen 0 < V < 0.5 liegt;
W im Bereich zwischen 0 < W ≤ 0.5 liegt;
X im Bereich zwischen 0 ≤ X < 0.5 liegt;
Y im Bereich zwischen 0 ≤ Y < 0.5 liegt;
Z ≥ 0 ist;
worin gilt, wenn M⁵ = Cobalt dann X ≥ 0.1;
und weiter worin V+W+X+Y+Z=1 ist.

2. Stoff gemäß Anspruch 1 worin V im Bereich zwischen 0.1 < V < 0.45 liegt; W im Bereich zwischen 0 < W ≤ 0.5 liegt; X im Bereich zwischen 0 ≤ X < 0.5 liegt; Y im Bereich zwischen 0 ≤ Y < 0.5 liegt; Z ≥ 0 ist; und worin V + W + X + Y + Z = 1 ist.

3. Stoff gemäß Anspruch 1 worin V im Bereich zwischen 0.3 < V < 0.45 liegt; W im Bereich zwischen 0.1 < W ≤ 0.5 liegt; X im Bereich zwischen 0.05 ≤ X < 0.45 liegt; Y im Bereich zwischen 0 ≤ Y < 0.45 liegt; Z ≥ 0 ist; und worin V + W + X + Y + Z = 1 ist.

4. Stoff gemäß Anspruch 1, worin M²≠ M⁴.

5. Stoff gemäß Anspruch 1 mit der Formel: LiNi_{0.5-x}Mn_{0.5-x}CaₓTiₓO₂, LiNi_{0.5-x}Mn_{0.5-x}MgₓTiₓO₂ LiNi_{0.5-x}Ti_{0.5-x}MgₓMnₓO₂ und Li_{0.95}Ni_{0.3167}Ti_{0.3167}Mg_{0.1583}Mn_{0.2083}O₂.

6. Elektrode, umfassend einen aktiven Stoff gemäß Anspruch 1.

7. Elektrode gemäß Anspruch 6, verwendet in Verbindung mit einer Gegenelektrode und einem oder mehreren Elektrolytmaterialien.

8. Elektrode gemäß Anspruch 7, worin das Elektrolytmaterial wässriges Elektrolytmaterial umfasst.

9. Elektrode gemäß Anspruch 7, worin das Elektrolytmaterial einen nicht-wässrigen Elektrolyten umfasst.

10. Energiespeichermedium, umfassend eine Elektrode gemäß Anspruch 6.

11. Energiespeichermedium gemäß Anspruch 10, geeignet für eine oder mehrere der folgenden Verwendungen: eine Alkalimetallionenzelle; eine Alkalimetall Metallzelle; eine nicht wässrige Elektrolyt- Alkalimetallionenzelle; und eine wässrige Elektrolyt-Alkalimetallionenzelle; worin das Alkalimetall Lithium alleine ist, oder eine Mixtur aus Lithium und einem oder mehrerer Alkalimetalle worin Lithium der Hauptbestandteil der Alkalimetallmixtur ist.

12. Wiederaufladbare Batterie, umfassend eine Elektrode gemäß Anspruch 6.

13. Elektrochemische Vorrichtung, umfassend eine Elektrode gemäß Anspruch 6.

14. Elektrochrome Vorrichtung, umfassend eine Elektrode gemäß Anspruch 6.

15. Verfahren zur Herstellung der Stoffe gemäß Anspruch 1, umfassend die folgenden Schritte:
a) Vermischen der Ausgangsmaterialien,
b) Erhitzen der vermischten Ausgangsmaterialien in einem Ofen bei einer Temperatur zwischen 400°C und 1500°C, für 2 bis 20 Stunden; und
c) Abkühlen der Reaktionsprodukte.

## Revendications

1. Composé répondant à la formule :
A_{1-δ} M¹_{V} M²_{W} M³ _{X} M⁴_{Y} M⁵_{Z} O₂
dans laquelle
A comprend soit du lithium soit un métal alcalin mixte dans lequel le lithium est le constituant majeur ;
M¹ représente du nickel à l'état d'oxydation +2
M² comprend un métal à l'état d'oxydation +4 choisi parmi un ou plusieurs du manganèse, du titane et du zirconium ;
M³ comprend un métal à l'état d'oxydation +2, choisi parmi un ou plusieurs du magnésium, du calcium, du cuivre, du zinc et du cobalt ;
M⁴ comprend un métal à l'état d'oxydation +4, choisi parmi un ou plusieurs du titane, du manganèse et du zirconium ;
M⁵ comprend un métal à l'état d'oxydation +3, choisi parmi un ou plusieurs de l'aluminium, du fer, du cobalt, du molybdène, du chrome, du vanadium, du scandium et de l'yttrium ;
dans laquelle
0 ≤ 5 ≤ 0,1 ;
V est compris dans l'intervalle 0 < V < 0,5 ;
W est compris dans l'intervalle 0 < W ≤ 0,5 ;
X est compris dans l'intervalle 0 ≤ X < 0,5 ;
Y est compris dans l'intervalle 0 ≤ Y < 0,5 ;
Z est ≥ 0 ;
dans laquelle lorsque M⁵ = cobalt alors X ≥ 0,1 ;
et en outre dans laquelle V + W + X + Y + Z = 1.

2. Composé selon la revendication 1 dans lequel V est compris dans l'intervalle 0,1 ≤ V ≤ 0,45 ; W est compris dans l'intervalle 0 < W ≤ 0,5 ; X est compris dans l'intervalle 0 ≤ X < 0,5 ; Y est compris dans l'intervalle 0 ≤ Y < 0,5 ; Z est ≥ 0 ; et dans lequel V + W + X + Y + Z = 1.

3. Composé selon la revendication 1 dans lequel V est compris dans l'intervalle 0,3 ≤ V ≤ 0,45 ; W est compris dans l'intervalle 0,1 ≤ W ≤ 0,5 ; X est compris dans l'intervalle 0,05 ≤ X < 0,45 ; Y est compris dans l'intervalle 0 ≤ Y ≤ 0,45 ; Z est ≥ 0 ; et dans lequel V+W+X+Y+Z=1.

4. Composé selon la revendication 1 dans lequel M² ≠ M⁴.

5. Composé selon la revendication 1 répondant à la formule : LiNi_{0,5-x}Mn_{0,5-x}CaₓTiₓO₂, LiNi_{0,5-x}Mn_{0,5-x}MgₓTiₓO₂ LiNi_{0,5-x}Ti_{0,5-x}MgₓMnₓO₂ et Li_{0,95}Ni_{0,3167}Ti_{0,3167}Mg_{0,1583}Mn_{0,2083}O₂.

6. Électrode comprenant un composé actif selon la revendication 1.

7. Électrode selon la revendication 6 utilisée conjointement avec une contre-électrode et un ou plusieurs matériaux électrolytes.

8. Électrode selon la revendication 7 dans laquelle le matériau électrolyte comprend un matériau électrolyte aqueux.

9. Électrode selon la revendication 7 dans laquelle le matériau électrolyte comprend un électrolyte non aqueux.

10. Dispositif de stockage d'énergie comprenant une électrode selon la revendication 6.

11. Dispositif de stockage d'énergie selon la revendication 10 adapté à une utilisation en tant qu'un ou plusieurs des éléments suivants : pile à ion de métal alcalin ; une pile à métal de métal alcalin ; une pile à ion de métal alcalin à électrolyte non aqueux ; et une pile à ion de métal alcalin à électrolyte aqueux, dans lequel le métal alcalin est du lithium seul ou un mélange de lithium et d'un ou plusieurs autres métaux alcalins dans lequel le lithium est le constituant métal alcalin majeur du mélange.

12. Batterie rechargeable comprenant une électrode selon la revendication 6.

13. Dispositif électrochimique comprenant une électrode selon la revendication 6.

14. Dispositif électrochromique comprenant une électrode selon la revendication 6.

15. Procédé de préparation des composés selon la revendication 1 comprenant les étapes suivantes :
a) mélange des produits de départ les uns aux autres,
b) chauffage des produits de départ mélangés dans un four à une température située entre 400 °C et 1 500 °C, pendant une durée située entre 2 et 20 heures ; et
c) refroidissement du produit réactionnel.
